(19) Europäisches Patentamt
European Patent Office
Office européen des brevets

(11) **EP 4 614 909 A1**

(12) **EUROPEAN PATENT APPLICATION**
published in accordance with Art. 153(4) EPC

(43) Date of publication:
**10.09.2025 Bulletin 2025/37**

(51) International Patent Classification (IPC):
**H04L 27/00** (2006.01)

(21) Application number: **22965476.9**

(52) Cooperative Patent Classification (CPC):
**H04L 27/00**

(22) Date of filing: **16.11.2022**

(86) International application number:
**PCT/CN2022/132258**

(87) International publication number:
**WO 2024/103291 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **YI, Xinfu
Hangzhou, Zhejiang 310027 (CN)**
• **LI, Rongpeng
Hangzhou, Zhejiang 310027 (CN)**
• **WANG, Fei
Shenzhen, Guangdong 518129 (CN)**
• **PENG, Chenghui
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **FEDERATED LEARNING METHOD AND COMMUNICATION APPARATUS**

(57) This application provides a federated learning method and a communication apparatus. The federated learning method includes: An access network device receives cumulative dual variable change parameters that are of a task b and that are sent by a plurality of terminal devices; the access network device determines a mean value of dual variable change parameters of the task b based on the cumulative dual variable change parameters that are of the task b and that are sent by the plurality of terminal devices; the access network device determines an updated model parameter of the task b based on the mean value of the dual variable change parameters of the task b; the access network device sends the updated model parameter of the task b to a server; the access network device receives an updated multi-task constraint parameter sent by the server; and the access network device sends, to the plurality of terminal devices, the updated model parameter and the updated multi-task constraint parameter that are of the task b. According to the method in this application, multi-task federated learning and hierarchical federated learning can be combined, so that computing difficulty of multi-task federated learning is reduced when a quantity of tasks is reduced.

FIG. 2

**Description**

**TECHNICAL FIELD**

This application relates to the field of communication technologies, and in particular, to a federated learning method and a communication apparatus.

**BACKGROUND**

Federated learning is a safe and efficient method to develop artificial intelligence on a distributed terminal, and has been applied to a wide range of scenarios. Most existing federated learning methods, such as FedAVG and FedProx, focus on obtaining a single global model by learning a task on a network. Due to limited resources and scarce data, compared with single-task federated learning, multi-task federated learning can better maintain diversity of models and integrate different learning tasks into a same system. In this way, learning accuracy and data utilization are greatly improved. For example, MOCHA attempts to provide a multi-task federated learning framework, and demonstrates that multi-task learning is a natural choice for dealing with statistics challenges in a federated scenario. However, because one task of MOCHA is trained by only one terminal device, and different terminal devices train different tasks, this setting does not comply with reality of federated learning, and an amount of computing required also increases exponentially with an increase of a quantity of terminal devices.

**SUMMARY**

This application provides a federated learning method and a communication apparatus, to help reduce computing overheads of multi-task federated learning.

According to a first aspect, this application provides a federated learning method. Optionally, the method may be performed by an access network device, or may be performed by a component (for example, a processor, a chip, or a chip system) of the access network device, or may be implemented by a logical module or software that can implement all or a part of functions of the access network device. The method includes the following steps.

The access network device receives cumulative dual variable change parameters that are of a task b and that are sent by a plurality of terminal devices, where the cumulative dual variable change parameter of the task b is $\sum_{i=1}^{S_{b,p}} \Delta\alpha_b^i x_b^i$, $\Delta\alpha_b^i$ is a change amount for adjusting a dual variable corresponding to an $i^{th}$ piece of data in $S_{b,p}$ pieces of data, an adjusted dual variable corresponding the $i^{th}$ piece of data is used to increase a value of a dual sub-problem corresponding to the task b, $x_b^i$ is the $i^{th}$ piece of data in the $S_{b,p}$ pieces of data, the $S_{b,p}$ pieces of data are data in a local training data set of the terminal device, the value of the dual sub-problem corresponding to the task b is obtained based on dual variables corresponding to all local training data sets of the task b and a conjugate dual function of a multi-task constraint of the task b, the multi-task constraint of the task b is obtained based on a multi-task constraint parameter, and the multi-task constraint parameter is determined based on model parameters of N tasks, where the N tasks include the task b, and N is an integer greater than 1;

> the access network device determines a mean value of dual variable change parameters of the task b based on the cumulative dual variable change parameters that are of the task b and that are sent by the plurality of terminal devices;
> the access network device determines an updated model parameter of the task b based on the mean value of the dual variable change parameters of the task b;
> the access network device sends the updated model parameter of the task b to a server;
> the access network device receives an updated multi-task constraint parameter sent by the server; and
> the access network device sends, to the plurality of terminal devices, the updated model parameter and the updated multi-task constraint parameter that are of the task b.

According to the method according to the first aspect, multi-task federated learning and hierarchical federated learning can be combined. One access network device corresponds to one task, different access network devices correspond to different tasks, and a plurality of terminal devices under a same access network device are configured to train a model of a same task. In this way, it is more realistic that the plurality of terminal devices participate in training of the same task, so that computing difficulty of multi-task federated learning is reduced when a quantity of tasks is reduced. In addition, this helps improve a system capacity, and helps reduce network communication overheads. Because a wireless network includes an access network device connected to terminal devices of a large quantity and a core network, the wireless network naturally has a hierarchical characteristic. Data collected by terminal devices in different regions varies to some extent, and a learning objective may vary to some extent with different access network devices. Therefore, the combination of multi-task federated learning and hierarchical federated learning brings considerable improvement to system performance.

In a possible implementation, that the access network device determines an updated model parameter of the task b based on the mean value of the dual variable change parameters of the task b includes:

The access network device sends the mean value of the dual variable change parameters of the task b to the server;

the access network device receives a mean value that is of dual variable change parameters corresponding to another task and that is sent by the server, where the another task is a task other than the task b in the N tasks;
the access network device determines a change amount of a model parameter of the task b based on a mean value of dual variable change parameters corresponding to the N tasks; and
the access network device determines the updated model parameter of the task b based on the change amount of the model parameter of the task b.

Based on this possible implementation, when a prior relationship between different tasks is unknown, the access network device of the task b can obtain the mean value of the dual variable change parameters corresponding to the another task. In this way, the model parameter of the task b can be accurately updated based on the mean value of the dual variable change parameters corresponding to the N tasks.

In a possible implementation, the multi-task constraint parameter includes W and $\Omega$, W is a matrix obtained by combining the model parameters of the N tasks, and $\Omega = (W^T W)^{\frac{1}{2}} / \left( tr(W^T W)^{\frac{1}{2}} \right)$.

In a possible implementation, $\Delta w_b = \frac{1}{\lambda_1} \sum_{b'=1}^{N} \Omega[b,b'] \overline{X_{b'}}$, $\Delta w_b$ is the change amount of the model parameter of the task b, $\lambda_1$ is greater than 0, and $\overline{X_{b'}}$ is a mean value of dual variable change parameters of a task b'.

In a possible implementation, $\mathcal{R}_b(w_b) = \frac{1}{N} \lambda_1 tr(W \Omega^{-1} W^T)$, $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$, and $\lambda_1$ is greater than 0.

In a possible implementation, that the access network device determines an updated model parameter of the task b based on the mean value of the dual variable change parameters of the task b includes:

The access network device determines the updated model parameter of the task b based on the mean value of the dual variable change parameters of the task b and the multi-task constraint parameter of the task b.

Based on this possible implementation, when a prior relationship between different tasks is known, and the tasks are similar to each other, the model parameter of the task b can be accurately updated. In addition, the access network device does not need to report the mean value of the dual variable change parameters of the task b to the server. This helps reduce transmission overheads.

In a possible implementation, the multi-task constraint parameter includes $\overline{w}$, $\overline{w} = \frac{1}{N} \sum_{b'=1}^{N} w_{b'}$, and $w_{b'}$ is a current model parameter of a task b'.

In a possible implementation, $w_{b,update} = \frac{1}{\lambda_2 + \lambda_3} \left( \lambda_3 \overline{w} + \overline{X_b} \right)$, $w_{b,update}$ is the updated model parameter of the task b, $\overline{X_b}$ is the mean value of the dual variable change parameters of the task b, and $\lambda_2$ and $\lambda_3$ are greater than 0.

In a possible implementation, $\mathcal{R}_b(w_b) = \frac{\lambda_3}{2} |w_b - \overline{w}|^2$, $\mathcal{R}_b(w_b)$ is the multi-task constraint of the task b, $w_b$ is a current model parameter of the task b, the conjugate dual function of the multi-task constraint of the task b is $\mathcal{R}_b^*(w_b)$, and $\lambda_3$ is greater than 0.

In a possible implementation,

$$D_b(\alpha_b) = \frac{1}{n_b} \sum_{j=1}^{n_b} -\mathcal{L}^* \left( -\alpha_b^j \right) + \mathcal{R}_b^*(w_b),$$

where

$D_b(\alpha_b)$ is the value of the dual sub-problem of the task b, $n_b$ is a total amount of training data of the task b, $\alpha_b^j$ is a dual variable of data $\left(x_b^j, y_b^j\right)$, $x_b^j$ is a $j^{th}$ piece of data in $n_b$ pieces of training data, $y_b^j$ is a label corresponding to the $j^{th}$ piece of data in the $n_b$ pieces of training data, $j \in \{1, ..., n_b\}$, $\alpha_b := \left[\alpha_b^1, ..., \alpha_b^{n_b}\right]$, $\mathcal{R}_b^*(w_b)$ is the conjugate dual function of $\mathcal{R}_b(w_b)$, $\mathcal{R}_b(w_b)$ is the multi-task constraint of the task b, and $w_b$ is the current model parameter of the task b.

According to a second aspect, this application provides a federated learning method. Optionally, the method may be performed by a terminal device, or may be performed by a component (for example, a processor, a chip, or a chip system) of the terminal device, or may be implemented by a logical module or software that can implement all or a part of functions of the terminal device. The method includes the following steps.

The terminal device adjusts dual variables corresponding to $S_{b,p}$ pieces of data in a local training data set, to increase a value of a dual sub-problem corresponding to a task b, where the value of the dual sub-problem corresponding to the task b is obtained based on dual variables corresponding to all local training data sets of the task b and a conjugate dual function of a multi-task constraint of the task b, the multi-task constraint of the task b is obtained based on a multi-task constraint parameter, and the multi-task constraint parameter is determined based on model parameters of N tasks, where the N tasks include the task b, and N is an integer greater than 1;

the terminal device sends a cumulative dual variable change parameter of the task b to an access network device, where the cumulative dual variable change parameter of the task b is $\sum_{i=1}^{S_{b,p}} \Delta\alpha_b^i x_b^i$, $\Delta\alpha_b^i$ is a change amount for adjusting a dual variable corresponding to an $i^{th}$ piece of data in the $S_{b,p}$ pieces of data, and $x_b^i$ is the $i^{th}$ piece of data in the $S_{b,p}$ pieces of data; and

the terminal device receives an updated model parameter and an updated multi-task constraint parameter that are of the task b and that are sent by the access network device.

In a possible implementation, the multi-task constraint parameter includes W and $\Omega$, W is a matrix obtained by combining the model parameters of the N tasks, and $\Omega = (W^T W)^{\frac{1}{2}} / \left(tr(W^T W)^{\frac{1}{2}}\right)$.

In a possible implementation, $\mathcal{R}_b(w_b) = \frac{1}{N}\lambda_1 tr(W\Omega^{-1}W^T)$, $\mathcal{R}_b(w_b)$ is the multi-task constraint of the task b, $w_b$ is a current model parameter of the task b, the conjugate dual function of the multi-task constraint of the task b is $\mathcal{R}_b^*(w_b)$, and $\lambda_1$ is greater than 0.

In a possible implementation, the multi-task constraint parameter includes $\overline{w}$, $\overline{w} = \frac{1}{N}\sum_{b'=1}^{N} w_{b'}$, and $w_{b'}$ is a current model parameter of a task b'.

In a possible implementation, $\mathcal{R}_b(w_b) = \frac{\lambda_3}{2}|w_b - \overline{w}|^2$, $\mathcal{R}_b(w_b)$ is the multi-task constraint of the task b, $w_b$ is a current model parameter of the task b, the conjugate dual function of the multi-task constraint of the task b is $\mathcal{R}_b^*(w_b)$, and $\lambda_3$ is greater than 0.

In a possible implementation,

$$D_b(\alpha_b) = \frac{1}{n_b}\sum_{j=1}^{n_b} -\mathcal{L}^*\left(-\alpha_b^j\right) + \mathcal{R}_b^*(w_b),$$

where

$D_b(\alpha_b)$ is the value of the dual sub-problem, $n_b$ is a total amount of training data of the task b, $\alpha_b^j$ is a dual variable of data $\left(x_b^j, y_b^j\right)$, $x_b^j$ is a $j^{th}$ piece of data in $n_b$ pieces of training data, $y_b^j$ is a label corresponding to the $j^{th}$ piece of data in the $n_b$ pieces of training data, $j \in \{1, ..., n_b\}$, $\alpha_b := \left[\alpha_b^1, ..., \alpha_b^{n_b}\right]$, $\mathcal{R}_b^*(w_b)$ is the conjugate dual function of $\mathcal{R}_b(w_b)$,

$\mathcal{R}_b(w_b)$ is the multi-task constraint of the task b, and $w_b$ is the current model parameter of the task b.

According to a third aspect, this application provides a federated learning method. Optionally, the method may be performed by a server, or may be performed by a component (for example, a processor, a chip, or a chip system) of the server, or may be implemented by a logical module or software that can implement all or a part of functions of the server. The method includes the following steps.

The server receives updated model parameters that are of N tasks and that are sent by N access network devices, where the N access network devices are in one-to-one correspondence with the N tasks, and N is an integer greater than 1;

the server updates multi-task constraint parameters of the N tasks based on the updated model parameters of the N tasks, to obtain updated multi-task constraint parameters; and

the server sends the updated multi-task constraint parameters to the N access network devices, where the updated multi-task constraint parameters are used for training model parameters of the N tasks.

In a possible implementation, before the server receives the updated model parameters that are of the N tasks and that are sent by the N access network devices, the method further includes:

The server receives mean values that are of dual variable change parameters corresponding to the N tasks and that are sent by the N access network devices; and

the server sends, to an access network device corresponding to a task b, a mean value of dual variable change parameters corresponding to another task, where the task b is any one of the N tasks, and the another task is a task other than the task b in the N tasks.

In a possible implementation, the updated multi-task constraint parameter includes $W_{update}$ and $\Omega_{update}$, $W_{update}$ is a matrix obtained by combining the updated model parameters of the N tasks, and

$$\Omega_{update} = \left(W_{update}{}^T W_{update}\right)^{\frac{1}{2}} / \left(tr\left(W_{update}{}^T W_{update}\right)^{\frac{1}{2}}\right).$$

In a possible implementation, the updated multi-task constraint parameter includes $\overline{w}_{update}$,

$\overline{w}_{update} = \frac{1}{N}\sum_{b'=1}^{N} w_{b',update}$, and $w_{b',update}$ is an updated model parameter of a task $b'$.

For beneficial effects of the second aspect and the third aspect, refer to beneficial effects of the first aspect. Details are not described herein again.

According to a fourth aspect, this application provides a communication apparatus. The communication apparatus may be an access network device, a terminal device, or a server, or may be an apparatus in the access network device, the terminal device, or the server, or may be an apparatus that can be used together with the access network device, the terminal device, or the server. The communication apparatus may alternatively be a chip system. The communication apparatus may perform the method according to the first aspect, the second aspect, or the third aspect. Functions of the communication apparatus may be implemented by hardware, or may be implemented by hardware by executing corresponding software. The hardware or software includes one or more units or modules corresponding to the foregoing functions. The unit or module may be software and/or hardware. For operations performed by the communication apparatus and beneficial effects, refer to the method and beneficial effects in the first aspect, the second aspect, or the third aspect.

According to a fifth aspect, this application provides a communication apparatus, where the communication apparatus includes a processor. When the processor invokes a computer program in a memory, the method according to the first aspect, the second aspect, or the third aspect is performed.

According to a sixth aspect, this application provides a communication apparatus, where the communication apparatus includes a processor and a memory, and the processor is coupled to the memory; and the processor is configured to implement the method according to the first aspect, the second aspect, or the third aspect.

According to a seventh aspect, this application provides a communication apparatus, where the communication apparatus includes a processor, a memory, and a transceiver, and the processor is coupled to the memory; and the transceiver is configured to send and receive data, and the processor is configured to implement the method according to the first aspect, the second aspect, or the third aspect.

According to an eighth aspect, this application provides a chip, where the chip includes a processor and an interface, and the processor is coupled to the interface; and the interface is configured to receive or output a signal, and the processor is configured to execute code instructions, to cause the method according to the first aspect, the second aspect, or the third aspect to be performed.

According to a ninth aspect, this application provides a computer-readable storage medium, where the storage medium stores a computer program or instructions. When the computer program or the instructions are executed by a communication apparatus, the method according to the first aspect, the second aspect, or the third aspect is implemented.

According to a tenth aspect, this application provides a computer program product including instructions. When a computer reads and executes the computer program product, the computer is caused to perform the method according to the first aspect, the second aspect, or the third aspect.

## BRIEF DESCRIPTION OF DRAWINGS

FIG. 1 is a diagram of a system architecture according to this application;
FIG. 2 is a schematic flowchart of a federated learning method according to this application;
FIG. 3 is a diagram of a structure of a communication apparatus according to this application;
FIG. 4 is a diagram of a structure of another communication apparatus according to this application; and
FIG. 5 is a diagram of a structure of a chip according to this application.

## DESCRIPTION OF EMBODIMENTS

The following further describes in detail specific embodiments of this application with reference to accompanying drawings.

Terms such as "first" and "second" in the specification, claims, and accompanying drawings of this application are used for distinguishing different objects, but are not used for describing a specific sequence. In addition, terms such as "include", "have", and any other variants thereof are intended to cover a non-exclusive inclusion. For example, a process, a method, a system, a product, or a device that includes a series of steps or units is not limited to listed steps or units, but optionally further includes steps or units that are not listed, or optionally further includes other steps or units inherent to such a process, method, product, or device.

"Embodiments" mentioned in the specification mean that specific features, structures, or characteristics described in combination with embodiments may be included in at least one embodiment of this application. The phrase shown in various locations in the specification does not necessarily all refer to a same embodiment, nor is an independent embodiment or an alternative embodiment to other embodiments. A person skilled in the art explicitly or implicitly understands that, embodiments described in the specification may be combined with another embodiment.

In this application, "at least one (item)" means one or more, "a plurality of" means two or more, and "at least two (items)" means two or three or more. "And/or" is used for describing an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a singular item (piece) or any combination of a plurality of items (pieces). For example, at least one of a, b, or c may indicate a, b, c, a and b, a and c, b and c, or a, b, and c, where a, b, and c may be singular or plural.

To better understand embodiments of this application, the following first describes a system architecture involved in embodiments of this application.

The technical solutions in embodiments of this application may be applied to various communication systems, such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, and a future communication system.

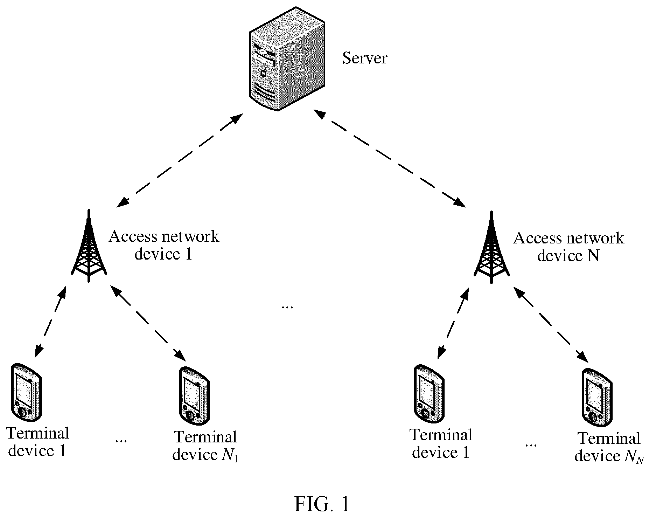

FIG. 1 is a diagram of a system architecture according to an embodiment of this application. As shown in FIG. 1, the system architecture includes a terminal device, an access network device, and a server. The terminal device may communicate with the access network device, and the access network device may communicate with the server. The system architecture includes N access network devices, and each of the access network devices includes a plurality of terminal devices under the access network devices. N is an integer greater than 1. Each of the access network devices corresponds to one task that needs to be trained, and different access network devices correspond to different tasks. There are N tasks in total. Terminal devices under a same access network device are configured to train a model of a same task.

For example, an access network device b corresponds to a task b, and a terminal device 1 to a terminal device $N_b$ that are under the access network device b are configured to train a model of the task b. In embodiments of this application, a terminal device configured to train a model of a task is referred to as a terminal device corresponding to the task.

The following separately describes in detail the terminal device, the access network device, and the server that are involved in the system architecture in FIG. 1.

1. Terminal device

The terminal device includes a device that provides voice and/or data connectivity for a user. For example, the terminal device is a device having a wireless transceiver function, and may be deployed on the land, including an indoor device or an outdoor device, a handheld device, a wearable device, or a vehicle-mounted device, or may be deployed on a water surface (for example, on a ship), or may be deployed in the air (for example, on an airplane, a balloon, or a satellite). The terminal may be a mobile phone (mobile phone), a tablet computer (Pad), a computer with a wireless transceiver function, a virtual reality (VR) terminal device, an augmented reality (AR) terminal device, a wireless terminal in industrial control (industrial control), a vehicle-mounted terminal device, a wireless terminal in self driving (self driving), a wireless terminal in remote medical (remote medical) health care, a wireless terminal in a smart grid (smart grid), a wireless terminal in transportation safety (transportation safety), a wireless terminal in a smart city (smart city), a wireless terminal in a smart home (smart home), a wearable terminal device, or the like. An application scenario is not limited in embodiments of this application. Alternatively, the terminal sometimes may also be referred to as terminal equipment, user equipment (user equipment, UE), an access terminal device, a vehicle-mounted terminal, an industrial control terminal, a UE unit, a UE station, a mobile station, a remote station, a remote terminal device, a mobile device, a UE terminal device, a terminal device, a wireless communication device, a UE agent, a UE apparatus, or the like. The terminal may alternatively be fixed or movable. In this application, the following uses UE for representing a terminal device.

2. Access network device

An interface between an access network device and a terminal device may be a Uu interface (also referred to as an air interface). Certainly, in future communication, names of these interfaces may remain unchanged, or may be replaced by other names. This is not limited in this application.

The access network device is a node or a device that connects the terminal device to a wireless network. The access network device may be any device having a wireless transceiver function, and includes but is not limited to: an evolved NodeB (NodeB or eNB or e-NodeB, evolved NodeB) in LTE, a base station (gNodeB or gNB) or a transmission reception point (Transmission Reception Point, TRP) in NR, a base station in 6G, a base station that is subsequently evolved from 3GPP, an access node in a Wi-Fi system, a wireless relay node, a wireless backhaul node, and the like. The base station may be a macro base station, a micro base station, a pico base station, a small cell, a relay station, a balloon station, or the like. A plurality of base stations may support networks of a same technology mentioned above, or may support networks of different technologies mentioned above. The base station may include one or more co-site or non-co-site TRPs. Alternatively, the access network device may be a radio controller, a central unit (Central Unit, CU), and/or a distributed unit (Distributed Unit, DU) in a cloud radio access network (Cloud Radio Access Network, CRAN) scenario.

3. Server

The server is a device configured to provide a computing service.

The following describes some technical terms:

1. Multi-task federated learning

From a perspective of a task, federated learning models can be classified into a single-task federated learning model and a multi-task federated learning model. The single-task federated learning model means that a system learns one global model. The multi-task federated learning model means that a system simultaneously learns a plurality of models. Compared with single-task federated learning, multi-task federated learning can better maintain diversity of the models and integrate different learning tasks into a same system. In this way, learning accuracy and data utilization are greatly improved.

2. Hierarchical federated learning

From a perspective of a network hierarchy structure, federated learning models can be classified into a single-layer federated learning model and a hierarchical federated learning model. In the single-layer federated learning model, such as FedAVG and FedProx, all terminals are directly connected to a server without considering a network hierarchy and a connection relationship between the server and the terminal. However, in hierarchical federated learning, an edge aggregation node (namely, an access network device) is added between terminals and a server, and gradients from the terminals are first aggregated via the edge aggregation node and then aggregated to the server. In this way, the hierarchical model reduces communication overheads when improving a model training speed.

The following further describes a federated learning method and a communication apparatus provided in embodiments of this application.

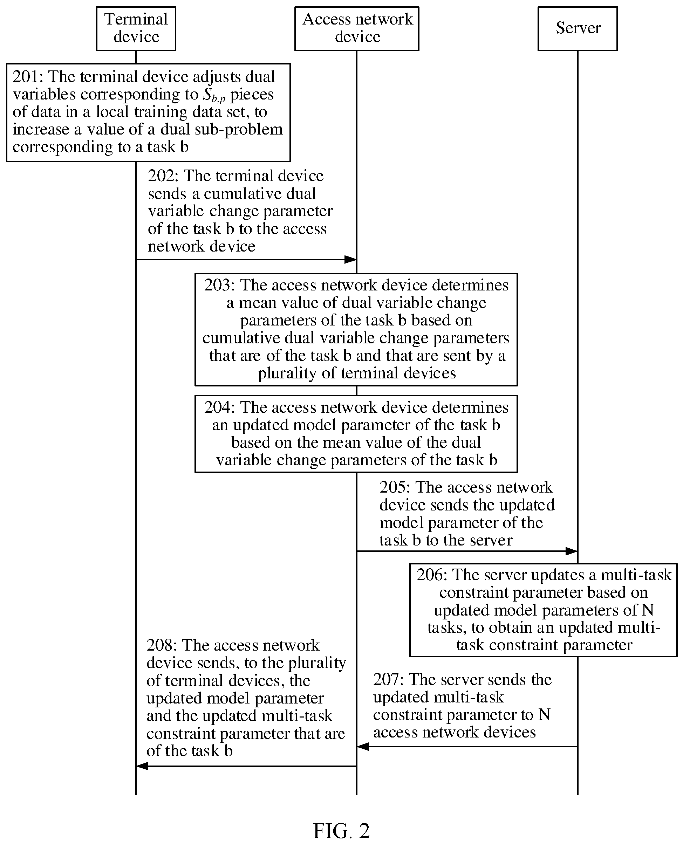

FIG. 2 is a schematic flowchart of a federated learning method according to an embodiment of this application. In FIG. 2, an example in which a terminal device, an access network device, and a server are used as execution bodies of the method is used. The execution body of the method is not limited in this application. For example, the execution body in FIG. 2 may be a chip, a chip system, or a processor that supports the terminal device, the access network device, or the server in implementing the method, or may be a logical module or software that can implement all or a part of functions of the terminal device, the access network device, or the server.

201: The terminal device adjusts dual variables corresponding to $S_{b,p}$ pieces of data in a local training data set, to increase a value of a dual sub-problem corresponding to a task b.

The value of the dual sub-problem corresponding to the task b is obtained based on dual variables corresponding to all local training data sets of the task b and a conjugate dual function of a multi-task constraint of the task b, the multi-task constraint of the task b is obtained based on a multi-task constraint parameter, and the multi-task constraint parameter is determined based on model parameters of N tasks, where the N tasks include the task b, and N is an integer greater than 1.

All the local training data sets of the task b include local training data sets of all terminal devices configured to train a model of the task b. For example, it is assumed that the task b corresponds to an access network device b, and there are $N_b$ terminal devices under the access network device b. The $N_b$ terminal devices are configured to train the model of the task b. All the local training data sets of the task b are all local training data sets of the $N_b$ terminal devices. One terminal device has one local training data set. Therefore, all the local training data sets of the task b include $N_b$ local training data sets.

The task b is any one of the N tasks. The $S_{b,p}$ pieces of data may be all or a part of data in the local data set of the terminal device.

In a possible implementation, $D_b(\alpha_b) = \frac{1}{n_b} \sum_{j=1}^{n_b} -\mathcal{L}^*\left(-\alpha_b^j\right) + \mathcal{R}_b^*(w_b)$, where $D_b(\alpha_b)$ is the value of the dual sub-problem corresponding to the task b, $n_b$ is a total amount of training data of the task b, $\alpha_b^j$ is a dual variable of data $\left(x_b^j, y_b^j\right)$, $x_b^j$ is a $j^{\text{th}}$ piece of data in $n_b$ pieces of training data, $y_b^j$ is a label corresponding to the $j^{\text{th}}$ piece of data in the $n_b$ pieces of training data, $j \in \{1, ..., n_b\}$, $\alpha_b := \left[\alpha_b^1, ..., \alpha_b^{n_b}\right]$, $\mathcal{R}_b^*(w_b)$ is a conjugate dual function of $\mathcal{R}_b(w_b)$, $\mathcal{R}_b(w_b)$ is the multi-task constraint of the task b, and $w_b$ is a current model parameter of the task b.

It is assumed that a target function of federated learning is:

$$\min_{W,R} \left\{ \frac{1}{N} \sum_{b=1}^{N} \left( \frac{1}{n_b} \sum_{j=1}^{n_b} \mathcal{L}(w_b^T x_b^j) + \frac{\lambda_4}{2} \|w_b\|^2 + \mathcal{R}_b(w_b) \right) \right\},$$

where

N is a quantity of tasks, $n_b$ is a total amount of training data of the task *b*, $w_b$ is the model parameter of the task b, $x_b^j$ is a $j^{\text{th}}$ piece of data in $n_b$ pieces of training data, $\lambda_4$ is greater than 0, $\mathcal{R}_b(w_b)$ is the multi-task constraint of the task b, $y_b^i = w_b^T x_b^i$, $y_b^j$ is a label corresponding to the $j^{\text{th}}$ piece of data in the $n_b$ pieces of training data, *W* is a vector of a model parameter of a task, and *R* is a vector of a multi-task constraint of a task.

To train associated multi-task models when it is ensured that local training data of the terminal device is not uploaded, a primal-dual method is introduced in this solution. Dual sub-problems that are independent of each other are designed, so that the terminal device is allowed to perform independent computation based on the local training data. In this way, execution efficiency is improved, and a privacy protection issue is further addressed. Theoretical analysis shows that dual of a primal problem is in the following form:

$$max_\alpha D\left(\alpha\right) := \frac{1}{N}\sum_{b=1}^{N} D_b(\alpha_b) = \frac{1}{N}\sum_{b=1}^{N}\left(\frac{1}{n_b}\sum_{b=1}^{n_b} -\mathcal{L}^*\left(-\alpha_b^i\right) + \mathcal{R}_b^*(w_b)\right)$$

The form may be decomposed into N mutually independent dual sub-problems $D_b(\alpha_3)$. $\alpha := [\alpha_1, ..., \alpha_3, ... , \alpha_N]$. Therefore, the terminal device may train the model parameter of the task b by adjusting the dual variables corresponding to the $S_{b,p}$ pieces of data in the local training data set, to increase the value of the dual sub-problem $D_b(\alpha_b)$ corresponding to the task b.

202: The terminal device sends a cumulative dual variable change parameter of the task b to the access network device.

The cumulative dual variable change parameter of the task b is $\sum_{i=1}^{S_{b,p}} \Delta\alpha_b^i x_b^i$, $\Delta\alpha_b^i$ is a change amount for adjusting a dual variable corresponding to an $i^{th}$ piece of data in the $S_{b,p}$ pieces of data, and $x_b^i$ is the $i^{th}$ piece of data in the $S_{b,p}$ pieces of data.

In step 201 and step 202, an operation performed by the terminal device is described from a perspective of a terminal device corresponding to the task b. Another terminal device corresponding to the task b may also perform an operation with a same principle as that in step 201 and step 202. Correspondingly, a terminal device corresponding to another task may also perform an operation with a same principle as that in step 201 and step 202.

Correspondingly, the access network device corresponding to the task b may receive cumulative dual variable change parameters that are of the task b and that are sent by a plurality of terminal devices corresponding to the task b. An access network device corresponding to the another task may receive a cumulative dual variable change parameter that is of the another task and that is sent by the terminal device corresponding to the another task.

203: The access network device determines a mean value of dual variable change parameters of the task b based on the cumulative dual variable change parameters that are of the task b and that are sent by the plurality of terminal devices.

The mean value of the dual variable change parameters of the task b is Sum of the cumulative dual variable change parameters that are of the task b and that are reported by the plurality of terminal devices/Total quantity of dual variables adjusted by the plurality of terminal devices.

204: The access network device determines an updated model parameter of the task b based on the mean value of the dual variable change parameters of the task b.

205: The access network device sends the updated model parameter of the task b to the server.

In step 203 to step 205, an operation performed by the access network device is described from a perspective of an access network device (namely, the access network device corresponding to the task b). An access network device corresponding to another task may also perform an operation with a same principle as that in step 203 to step 205. In other words, access network devices corresponding to the N tasks all send updated model parameters of the corresponding tasks to the server. Correspondingly, the server may receive the updated model parameters that are of the N tasks and that are sent by the access network devices corresponding to the N tasks.

For example, it is assumed that N is 2, and the N tasks include a task 1 and a task 2. The task 1 corresponds to an access network device 1, and a terminal device 1 and a terminal device 2 under the access network device 1 are configured to train a model of the task 1. The task 2 corresponds to an access network device 2, and a terminal device 3 and a terminal device 4 under the access network device 2 are configured to train a model of the task 2.

The terminal device 1 has a local training data set 1, and the terminal device 1 adjusts dual variables corresponding to $S_{1,p1}$ pieces of data in the local training data set 1, to increase a value of a dual sub-problem corresponding to the task 1. The terminal device 1 sends a cumulative dual variable change parameter of the task 1 to the access network device 1. The terminal device 2 has a local training data set 2, and the terminal device 2 adjusts dual variables corresponding to $S_{1,p2}$ pieces of data in the local training data set 2, to increase the value of the dual sub-problem corresponding to the task 1. The terminal device 2 sends a cumulative dual variable change parameter of the task 1 to the access network device 1. The access network device 1 determines a mean value $\overline{X_1} = \frac{P_1}{Q_1}$ of dual variable change parameters of the task 1. $P_1$ is a sum of the cumulative dual variable change parameter that is of the task 1 and that is reported by the terminal device 1 and the cumulative dual variable change parameter that is of the task 1 and that is reported by the terminal device 2, and $Q_1 = S_{1,p1} + S_{1,p2}$. The access network device 1 determines an updated model parameter of the task 1 based on the mean value $\overline{X_1}$ of the dual variable change parameters of the task 1. The access network device 1 sends the updated model parameter of the task 1 to the server.

The terminal device 3 has a local training data set 3, and the terminal device 3 adjusts dual variables corresponding to $S_{2,p1}$ pieces of data in the local training data set 3, to increase a value of a dual sub-problem corresponding to the task 2. The terminal device 3 sends a cumulative dual variable change parameter of the task 2 to the access network device 2. The terminal device 4 has a local training data set 4, and the terminal device 4 adjusts dual variables corresponding to $S_{2,p2}$ pieces of data in the local training data set 4, to increase the value of the dual sub-problem corresponding to the task 2. The terminal device 4 sends a cumulative dual variable change parameter of the task 2 to the access network device 2. The access network device 2 determines a mean value $\overline{X_2} = \frac{P_2}{Q_2}$ of dual variable change parameters of the task 2. $P_2$ is a sum of the cumulative dual variable change parameter that is of the task 2 and that is reported by the terminal device 3 and the cumulative dual variable change parameter that is of the task 2 and that is reported by the terminal device 4, and $Q_2 = S_{2,p1} + S_{2,p2}$. The access network device 2 determines an updated model parameter of the task 2 based on the mean value $\overline{X_2}$ of the dual variable change parameters of the task 2. The access network device 2 sends the updated model parameter of the task 2 to the server.

206: The server updates the multi-task constraint parameter based on the updated model parameters of the N tasks, to obtain an updated multi-task constraint parameter.

207: The server sends the updated multi-task constraint parameter to N access network devices.

In this embodiment of this application, after determining the updated multi-task constraint parameters of the N tasks, the server sends the updated multi-task constraint parameters of the N tasks to the N access network devices, so that the N access network devices deliver the updated multi-task constraint parameters of the tasks to the terminal devices. In this way, the terminal devices may train the model parameters of the tasks based on the task constraint parameter. In other words, N multi-task constraint parameters are used for training the model parameters of the N tasks. Correspondingly, the N access network devices may receive the updated multi-task constraint parameters that are of the N tasks and that is sent by the server.

208: The access network device sends, to the plurality of terminal devices, the updated model parameter and the updated multi-task constraint parameter that are of the task b. Correspondingly, the plurality of terminal devices receive the updated model parameter and the updated multi-task constraint parameter that are of the task b and that are sent by the access network device.

In step 208, an operation performed by the access network device is described from a perspective of an access network device (namely, the access network device corresponding to the task b). An access network device corresponding to another task may also perform an operation with a same principle as that in step 208.

For example, the access network device 1 sends the updated model parameter of the task 1 to the server. The access network device 2 sends the updated model parameter of the task 2 to the server. The server updates the multi-task constraint parameter based on the updated model parameter of the task 1 and the updated model parameter of the task 2, to obtain an updated multi-task constraint parameter, and sends the updated multi-task constraint parameter to the access network device 1 and the access network device 2. The access network device 1 sends the updated multi-task constraint parameter to the terminal devices under the access network device 1. The access network device 2 sends the updated multi-task constraint parameter to the terminal devices under the access network device 2.

In this embodiment of this application, a frequency at which the terminal device receives the updated model parameter of the task may be higher than a frequency at which the terminal device receives the updated multi-task constraint parameter. In other words, time when the access network device sends the updated model parameter of the task to the terminal device may be different from time when the terminal device sends the updated multi-task constraint parameter to the terminal device. After obtaining the updated model parameter of the task, the access network device may directly send the updated model parameter to the terminal device, and does not need to wait until the updated multi-task constraint parameter is obtained, and then send the updated model parameter of the task to the terminal device. After receiving the updated model parameter of the task, the terminal device may start a next round of inner-loop iterative training by using the updated model parameter. Similarly, after receiving the updated multi-task constraint parameter, the terminal device may start a next round of outer-loop iterative training by using the updated multi-task constraint parameter. When an error of the model is small, or a difference between the value of the sub-problem $D_b(\alpha_b)$ and a maximum value of $D_b(\alpha_b)$ is less than a preset value, the terminal device stops training.

In a possible implementation,

$$D_b(\alpha_b) = \frac{1}{n_b}\sum_{j=1}^{n_b} -\mathcal{L}^*\left(-\alpha_b^j\right) + \mathcal{R}_b^*(w_b),$$

where

$D_b(\alpha_b)$ is the value of the dual sub-problem of the task b, $n_b$ is the total amount of training data of the task b, $\alpha_b^j$ is the dual variable of the data $\left(x_b^j, y_b^j\right)$, $x_b^j$ is the j$^{\text{th}}$ piece of data in the $n_b$ pieces of training data, $y_b^j$ is the label corresponding to the jth piece of data in the $n_b$ pieces of training data, $j \in \{1, ..., n_b\}$, $\alpha_b := \left[\alpha_b^1, ..., \alpha_b^{n_b}\right]$, $\mathcal{R}_b^*(w_b)$ is the conjugate

dual function of $\mathcal{R}_b(w_b)$, $\mathcal{R}_b(w_b)$ is the multi-task constraint of the task b, and $w_b$ is the current model parameter of the task b.

The following describes two manners in which the access network device determines the updated model parameter of the task b based on the mean value of the dual variable change parameters of the task b.

Manner 1: The access network device sends the mean value of the dual variable change parameters of the task b to the server; the server may receive mean values that are of dual variable change parameters corresponding to the N tasks and that are sent by the N access network devices; and the server sends, to the access network device corresponding to the task b, a mean value of dual variable change parameters corresponding to another task, where the task b is any one of the N tasks, and the another task is a task other than the task b in the N tasks. Correspondingly, the access network device receives the mean value that is of the dual variable change parameters corresponding to the another task and that is sent by the server; the access network device determines a change amount of the model parameter of the task b based on a mean value of dual variable change parameters corresponding to the N tasks; and the access network device determines the updated model parameter of the task b based on the change amount of the model parameter of the task b.

For example, it is assumed that N is 2, and the N tasks include a task 1 and a task 2. The task 1 corresponds to an access network device 1, and a terminal device 1 and a terminal device 2 under the access network device 1 are configured to train a model of the task 1. The task 2 corresponds to an access network device 2, and a terminal device 3 and a terminal device 4 under the access network device 2 are configured to train a model of the task 2.

The access network device 1 sends a mean value of dual variable change parameters of the task 1 to the server. The access network device 2 sends a mean value of dual variable change parameters of the task 2 to the server. The server sends the mean value of the dual variable change parameters of the task 2 to the access network device 1, and sends the mean value of the dual variable change parameters of the task 1 to the access network device 2. In this way, both the access network device 1 and the access network device 2 obtain the mean value of the dual variable change parameters corresponding to the task 1 and the mean value of the dual variable change parameters corresponding to the task 2. The access network device 1 determines a change amount of a model parameter of the task 1 based on the mean value of the dual variable change parameters corresponding to the task 1 and the mean value of the dual variable change parameters corresponding to the task 2. The access network device 1 determines an updated model parameter of the task 1 based on the change amount of the model parameter of the task 1. Similarly, the access network device 2 determines a change amount of a model parameter of the task 2 based on the mean value of the dual variable change parameters corresponding to the task 1 and the mean value of the dual variable change parameters corresponding to the task 2. The access network device 2 determines an updated model parameter of the task 2 based on the change amount of the model parameter of the task 2.

Based on this possible implementation, when a prior relationship between different tasks is unknown, the access network device corresponding to the task b can obtain the mean value of the dual variable change parameters corresponding to the another task. In this way, the model parameter of the task b can be accurately updated based on the mean value of the dual variable change parameters corresponding to the N tasks.

In a possible implementation, the multi-task constraint parameter includes W and $\Omega$, W is a matrix obtained by combining the model parameters of the N tasks, and $\Omega = (W^T W)^{\frac{1}{2}} / \left(tr(W^T W)^{\frac{1}{2}}\right)$.

In a possible implementation, $\Delta w_b = \frac{1}{\lambda_1} \sum_{b'=1}^{N} \Omega[b, b'] \overline{X_{b'}}$, $\Delta w_b$ is the change amount of the model parameter of the task b, $\lambda_1$ is greater than 0, and $\overline{X_{b'}}$ is a mean value of dual variable change parameters of a task b'.

In a possible implementation, $\mathcal{R}_b(w_b) = \frac{1}{N} \lambda_1 tr(W \Omega^{-1} W^T)$, $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$, and $\lambda_1$ is greater than 0.

In a possible implementation, the updated multi-task constraint parameter includes $W_{update}$ and $\Omega_{update}$, $W_{update}$ is a matrix obtained by combining the updated model parameters of the N tasks, and

$$\Omega_{update} = \left(W_{update}{}^T W_{update}\right)^{\frac{1}{2}} / \left(tr\left(W_{update}{}^T W_{update}\right)^{\frac{1}{2}}\right).$$

Manner 2: The access network device determines the updated model parameter of the task b based on the mean value of the dual variable change parameters of the task b and the multi-task constraint parameter of the task b.

Based on this possible implementation, when a prior relationship between different tasks is known, and the tasks are similar to each other, the model parameter of the task b can be accurately updated. In addition, the access network device does not need to report the mean value of the dual variable change parameters of the task b to the server. This helps reduce transmission overheads.

In a possible implementation, the multi-task constraint parameter includes $\overline{w}$, $\overline{w} = \frac{1}{N}\sum_{b'=1}^{N} w_{b'}$, and $w_{b'}$ is a current model parameter of a task b'.

In a possible implementation, $w_{b,update} = \frac{1}{\lambda_2+\lambda_3}\left(\lambda_3\overline{w} + \overline{X_b}\right)$, $w_{b,update}$ is the updated model parameter of the task b, $\overline{X_b}$ is the mean value of the dual variable change parameters of the task b, and $\lambda_2$ and $\lambda_3$ are greater than 0.

In a possible implementation, $\mathcal{R}_b(w_b) = \frac{\lambda_3}{2}\left|w_b - \overline{w}\right|^2$, $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$, and $\lambda_3$ is greater than 0.

In a possible implementation, the updated multi-task constraint parameter includes $\overline{w}_{update}$, $\overline{w}_{update} = \frac{1}{N}\sum_{b'=1}^{N} w_{b',update}$, and $w_{b',update}$ is an updated model parameter of the task b'.

According to the method described in FIG. 2, multi-task federated learning and hierarchical federated learning can be combined. One access network device corresponds to one task, different access network devices correspond to different tasks, and a plurality of terminal devices under a same access network device are configured to train a model of a same task. In this way, it is more realistic that the plurality of terminal devices participate in training of the same task, so that computing difficulty of multi-task federated learning is reduced when a quantity of tasks is reduced. In addition, this helps improve a system capacity, and helps reduce network communication overheads. Because a wireless network includes an access network device connected to terminal devices of a large quantity and a core network, the wireless network naturally has a hierarchical characteristic. Data collected by terminal devices in different regions varies to some extent, and a learning objective may vary to some extent with different access network devices. Therefore, the combination of multi-task federated learning and hierarchical federated learning brings considerable improvement to system performance.

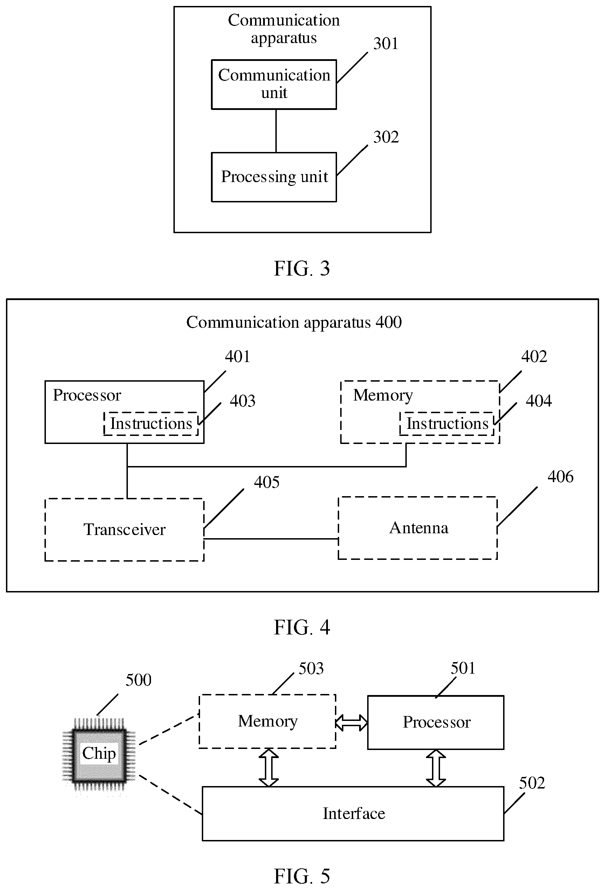

FIG. 3 is a diagram of a structure of a communication apparatus according to an embodiment of this application. The communication apparatus shown in FIG. 3 may be configured to perform a part or all of functions of the access network device in the foregoing method embodiments. The apparatus may be an access network device, or may be an apparatus in the access network device, or may be an apparatus that can be used together with the access network device. The communication apparatus may alternatively be a chip system. The communication apparatus shown in FIG. 3 may include a communication unit 301 and a processing unit 302. The processing unit 302 is configured to process data. The communication unit 301 is integrated with a receiving unit and a sending unit. The communication unit 301 may also be referred to as a transceiver unit. Alternatively, the communication unit 301 may be split into a receiving unit and a sending unit.

The communication unit 301 is configured to receive cumulative dual variable change parameters that are of a task b and that are sent by a plurality of terminal devices, where the cumulative dual variable change parameter of the task b is $\sum_{i=1}^{S_{b,p}} \Delta\alpha_b^i x_b^i$, $\Delta\alpha_b^i$ is a change amount for adjusting a dual variable corresponding to an $i^{th}$ piece of data in $S_{b,p}$ pieces of data, an adjusted dual variable corresponding the $i^{th}$ piece of data is used to increase a value of a dual sub-problem corresponding to the task b, $x_b^i$ is the $i^{th}$ piece of data in the $S_{b,p}$ pieces of data, the $S_{b,p}$ pieces of data are data in a local training data set of the terminal device, the value of the dual sub-problem corresponding to the task b is obtained based on dual variables corresponding to all local training data sets of the task b and a conjugate dual function of a multi-task constraint of the task b, the multi-task constraint of the task b is obtained based on a multi-task constraint parameter, and the multi-task constraint parameter is determined based on model parameters of N tasks, where the N tasks include the task b, and N is an integer greater than 1.

The processing unit 302 is configured to determine a mean value of dual variable change parameters of the task b based on the cumulative dual variable change parameters that are of the task b and that are sent by the plurality of terminal devices.

The processing unit 302 is further configured to determine an updated model parameter of the task b based on the mean value of the dual variable change parameters of the task b.

The communication unit 301 is further configured to send the updated model parameter of the task b to a server.

The communication unit 301 is further configured to receive an updated multi-task constraint parameter sent by the server.

The communication unit 301 is further configured to send, to the plurality of terminal devices, the updated model parameter and the updated multi-task constraint parameter that are of the task b.

In a possible implementation, that the processing unit 302 determines the updated model parameter of the task b based on the mean value of the dual variable change parameters of the task b includes:

sending the mean value of the dual variable change parameters of the task b to the server;
receiving a mean value that is of dual variable change parameters corresponding to another task and that is sent by the server, where the another task is a task other than the task b in the N tasks;
determining a change amount of a model parameter of the task b based on a mean value of dual variable change parameters corresponding to the N tasks; and
determining the updated model parameter of the task b based on the change amount of the model parameter of the task b.

In a possible implementation, the multi-task constraint parameter includes W and $\Omega$, W is a matrix obtained by combining the model parameters of the N tasks, and $\Omega = (W^T W)^{\frac{1}{2}} / \left( tr(W^T W)^{\frac{1}{2}} \right)$.

In a possible implementation, $\Delta w_b = \frac{1}{\lambda_1} \sum_{b'=1}^{N} \Omega[b, b'] \overline{X_{b'}}$, $\Delta w_b$ is the change amount of the model parameter of the task b, $\lambda_1$ is greater than 0, and $\overline{X_{b'}}$ is a mean value of dual variable change parameters of a task b'.

In a possible implementation, $\mathcal{R}_b(w_b) = \frac{1}{N} \lambda_1 tr(W \Omega^{-1} W^T)$, $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$, and $\lambda_1$ is greater than 0.

In a possible implementation, that the processing unit 302 determines the updated model parameter of the task b based on the mean value of the dual variable change parameters of the task b includes:
determining the updated model parameter of the task b based on the mean value of the dual variable change parameters of the task b and the multi-task constraint parameter of the task b.

In a possible implementation, the multi-task constraint parameter includes $\overline{w}$, $\overline{W} = \frac{1}{N} \sum_{b'=1}^{N} W_{b'}$, and $w_{b'}$ is a current model parameter of a task b'.

In a possible implementation, $W_{b,update} = \frac{1}{\lambda_2 + \lambda_3} \left( \lambda_3 \overline{W} + \overline{X_b} \right)$, $w_{b,update}$ is the updated model parameter of the task b, $\overline{X_b}$ is the mean value of the dual variable change parameters of the task b, and $\lambda_2$ and $\lambda_3$ are greater than 0.

In a possible implementation, $\mathcal{R}_b(w_b) = \frac{\lambda_3}{2} |w_b - \overline{w}|^2$, $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$, and $\lambda_3$ is greater than 0.

In a possible implementation,

$$D_b(\alpha_b) = \frac{1}{n_b} \sum_{j=1}^{n_b} -\mathcal{L}^* \left( -\alpha_b^j \right) + \mathcal{R}_b^*(w_b),$$

where

$D_b(\alpha_b)$ is the value of the dual sub-problem of the task b, $n_b$ is a total amount of training data of the task b, $\alpha_b^j$ is a dual variable of data $\left( x_b^j, y_b^j \right)$, $x_b^j$ is a jth piece of data in $n_b$ pieces of training data, $y_b^j$ is a label corresponding to the jth piece of data in the $n_b$ pieces of training data, $j \in \{1, ..., n_b\}$, $\alpha_b := \left[ \alpha_b^1, ..., \alpha_b^{n_b} \right]$, $\mathcal{R}_b^*(w_b)$ is the conjugate dual function of $\mathcal{R}_b(w_b)$, $\mathcal{R}_b(w_b)$ is the multi-task constraint of the task b, and $w_b$ is the current model parameter of the task b.

FIG. 3 is a diagram of a structure of a communication apparatus according to an embodiment of this application. The communication apparatus shown in FIG. 3 may be configured to perform a part or all of functions of the terminal device in the foregoing method embodiments. The apparatus may be a terminal device, or may be an apparatus in the terminal device, or may be an apparatus that can be used together with the terminal device. The communication apparatus may alternatively be a chip system. The communication apparatus shown in FIG. 3 may include a communication unit 301 and a processing unit 302. The processing unit 302 is configured to process data. The communication unit 301 is integrated with a receiving unit and a sending unit. The communication unit 301 may also be referred to as a transceiver unit. Alternatively, the communication unit 301 may be split into a receiving unit and a sending unit.

The processing unit 302 is configured to adjust dual variables corresponding to $S_{b,p}$ pieces of data in a local training data set, to increase a value of a dual sub-problem corresponding to a task b, where the value of the dual sub-problem corresponding to the task b is obtained based on dual variables corresponding to all local training data sets of the task b and a conjugate dual function of a multi-task constraint of the task b, the multi-task constraint of the task b is obtained based on a multi-task constraint parameter, and the multi-task constraint parameter is determined based on model parameters of N tasks, where the N tasks include the task b, and N is an integer greater than 1.

The communication unit 301 is configured to send a cumulative dual variable change parameter of the task b to an access network device, where the cumulative dual variable change parameter of the task b is $\sum_{i=1}^{S_{b,p}} \Delta \alpha_b^i x_b^i$, $\Delta \alpha_b^i$ is a change amount for adjusting a dual variable corresponding to an $i^{th}$ piece of data in the $S_{b,p}$ pieces of data, and $x_b^i$ is the $i^{th}$ piece of data in the $S_{b,p}$ pieces of data.

The communication unit 301 is further configured to receive an updated model parameter and an updated multi-task constraint parameter that are of the task b and that are sent by the access network device.

In a possible implementation, the multi-task constraint parameter includes W and Ω, W is a matrix obtained by combining the model parameters of the N tasks, and $\Omega = (W^T W)^{\frac{1}{2}} / \left( tr(W^T W)^{\frac{1}{2}} \right)$.

In a possible implementation, $\mathcal{R}_b(w_b) = \frac{1}{N} \lambda_1 tr(W \Omega^{-1} W^T)$, $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$, and $\lambda_1$ is greater than 0.

In a possible implementation, the multi-task constraint parameter includes $\overline{w}$, $\overline{w} = \frac{1}{N} \sum_{b'=1}^{N} w_{b'}$, and $w_{b'}$ is a current model parameter of a task b'.

In a possible implementation, $\mathcal{R}_b(w_b) = \frac{\lambda_3}{2} |w_b - \overline{w}|^2$, $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$, and $\lambda_3$ is greater than 0.

In a possible implementation,

$$D_b(\alpha_b) = \frac{1}{n_b} \sum_{j=1}^{n_b} -\mathcal{L}^* \left( -\alpha_b^j \right) + \mathcal{R}_b^*(w_b),$$

where

$D_b(\alpha_b)$ is the value of the dual sub-problem, $n_b$ is a total amount of training data of the task $b$, $\alpha_b^j$ is a dual variable of data $\left( x_b^j, y_b^j \right)$, $x_b^j$ is a $j^{th}$ piece of data in $n_b$ pieces of training data, $y_b^j$ is a label corresponding to the $j^{th}$ piece of data in the $n_b$ pieces of training data, $j \in \{1, ..., n_b\}$, $\alpha_b := \left[ \alpha_b^1, ..., \alpha_b^{n_b} \right]$, $\mathcal{R}_b^*(w_b)$ is the conjugate dual function of $\mathcal{R}_b(w_b)$, $\mathcal{R}_b(w_b)$ is the multi-task constraint of the task b, and $w_b$ is the current model parameter of the task b.

FIG. 3 is a diagram of a structure of a communication apparatus according to an embodiment of this application. The communication apparatus shown in FIG. 3 may be configured to perform a part or all of functions of the server in the foregoing method embodiments. The apparatus may be a server, or may be an apparatus in the server, or may be an apparatus that can be used together with the server. The communication apparatus may alternatively be a chip system. The communication apparatus shown in FIG. 3 may include a communication unit 301 and a processing unit 302. The processing unit 302 is configured to process data. The communication unit 301 is integrated with a receiving unit and a sending unit. The communication unit 301 may also be referred to as a transceiver unit. Alternatively, the communication unit 301 may be split into a receiving unit and a sending unit.

The communication unit 301 is configured to receive updated model parameters that are of N tasks and that are sent by N access network devices, where the N access network devices are in one-to-one correspondence with the N tasks, and N is an integer greater than 1.

The processing unit 302 is configured to update multi-task constraint parameters of the N tasks based on the updated model parameters of the N tasks, to obtain updated multi-task constraint parameters.

The communication unit 301 is further configured to send the updated multi-task constraint parameters to the N access network devices, where the updated multi-task constraint parameters are used for training model parameters of the N tasks.

In a possible implementation, before the server receives the updated model parameters that are of the N tasks and that are sent by the N access network devices, the method further includes:

The server receives mean values that are of dual variable change parameters corresponding to the N tasks and that are sent by the N access network devices; and
the server sends, to an access network device corresponding to a task b, a mean value of dual variable change parameters corresponding to another task, where the task b is any one of the N tasks, and the another task is a task other than the task b in the N tasks.

In a possible implementation, the updated multi-task constraint parameter includes $W_{update}$ and $\Omega_{update}$, $W_{update}$ is a matrix obtained by combining the updated model parameters of the N tasks, and

$$\Omega_{update} = \left(W_{update}{}^T W_{update}\right)^{\frac{1}{2}} / \left(tr\left(W_{update}{}^T W_{update}\right)^{\frac{1}{2}}\right).$$

In a possible implementation, the updated multi-task constraint parameter includes $\overline{w}_{update}$,

$$\overline{W}_{update} = \frac{1}{N}\sum_{b'=1}^{N} W_{b',update}$$, and $w_{b',update}$ is an updated model parameter of a task b'.

FIG. 4 is a diagram of a structure of another communication apparatus. The communication apparatus 400 may be the access network device, the terminal device, or the server in the foregoing method embodiments, or may be a chip, a chip system, a processor, or the like that supports the access network device, the terminal device, or the server in implementing the foregoing method. The communication apparatus may be configured to implement the method described in the foregoing method embodiments. For details, refer to descriptions in the foregoing method embodiments.

The communication apparatus 400 may include one or more processors 401. The processor 401 may be a general-purpose processor, a dedicated processor, or the like. For example, the processor 401 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

Optionally, the communication apparatus 400 may include one or more memories 402, and the memory may store instructions 404. The instructions may be run on the processor 401, to cause the communication apparatus 400 to perform the method described in the foregoing method embodiments. Optionally, the memory 402 may further store data. The processor 401 and the memory 402 may be separately arranged, or may be integrated together.

Optionally, the communication apparatus 400 may further include a transceiver 405 and an antenna 406. The transceiver 405 may be referred to as a transceiver unit, a transceiver machine, a transceiver circuit, or the like, and is configured to implement a transceiver function. The transceiver 405 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 302 shown in FIG. 3 may be the processor 401. The communication unit 301 may be the transceiver 405.

In another possible design, the processor 401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 401 may store instructions 403, and the instructions 403 are run on the processor 401, so that the communication apparatus 400 can perform the method described in the foregoing method embodiments. The instructions 403 may be fixed in the processor 401. In this case, the processor 401 may be implemented by hardware.

In yet another possible design, the communication apparatus 400 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC processing technologies, such as a complementary metal oxide semiconductor (complementary metal oxide semiconductor, CMOS), an n-type metal oxide semiconductor (nMetal-oxide-semiconductor, NMOS), a p-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be an access network device, a terminal device, or a server. However, a scope of the communication apparatus described in embodiments of this application is not limited thereto, and a structure of the communication apparatus may not be limited in FIG. 4. The communication apparatus may be an independent device or may be a part of a large device. For example, the communication apparatus may be:

(1) an independent integrated circuit IC, a chip, or a chip system or subsystem;
(2) a set having one or more ICs, where optionally, the IC set may further include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

For a case in which the communication apparatus may be a chip or a chip system, refer to a diagram of a structure of a chip shown in FIG. 5. The chip 500 shown in FIG. 5 includes a processor 501 and an interface 502. Optionally, the chip may further include a memory 503. There may be one or more processors 501, and there may be a plurality of interfaces 502.

For a case in which the chip is configured to implement functions of the access network device, the terminal device, or the server in embodiments of this application:

the interface 502 is configured to receive or output a signal; and
the processor 501 is configured to perform a data processing operation of a network device or a terminal device.

It may be understood that, in some scenarios, some optional features in embodiments of this application may be independently implemented without depending on another feature, for example, a solution on which the optional features currently are based, to resolve a corresponding technical problem and achieve corresponding effects. Alternatively, in some scenarios, the optional features may be combined with another feature based on a requirement. Correspondingly, the communication apparatus provided in embodiments of this application may also correspondingly implement the features or functions. Details are not described herein again.

It should be understood that, the processor in embodiments of this application may be an integrated circuit chip, and has a signal processing capability. In an implementation process, steps in the foregoing method embodiments can be completed via an integrated logic circuit of hardware in a processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that, the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative descriptions, many forms of RAMs may be available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, memories of the systems and methods described in this specification are intended to include but are not limited to these memories and any memory of another proper type.

This application further provides a computer-readable medium. The storage medium stores a computer program or instructions. When the computer program or the instructions are executed by a communication apparatus, functions in any one of the foregoing method embodiments are implemented.

This application further provides a computer program product including instructions. When a computer reads and executes the computer program product, the computer is caused to implement functions in any one of the foregoing method embodiments.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer instructions. When the computer instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be stored in a computer, or a data storage device such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A federated learning method, wherein the method comprises:

   receiving, by an access network device, cumulative dual variable change parameters that are of a task b and that are sent by a plurality of terminal devices, wherein the cumulative dual variable change parameter of the task b is $\sum_{i=1}^{S_{b,p}} \Delta\alpha_b^i x_b^i$, $\Delta\alpha_b^i$ is a change amount for adjusting a dual variable corresponding to an i$^{th}$ piece of data in $S_{b,p}$ pieces of data, an adjusted dual variable corresponding the i$^{th}$ piece of data is used to increase a value of a dual sub-problem corresponding to the task b, $x_b^i$ is the i$^{th}$ piece of data in the $S_{b,p}$ pieces of data, the $S_{b,p}$ pieces of data are data in a local training data set of the terminal device, the value of the dual sub-problem corresponding to the task b is obtained based on dual variables corresponding to all local training data sets of the task b and a conjugate dual function of a multi-task constraint of the task b, the multi-task constraint of the task b is obtained based on a multi-task constraint parameter, and the multi-task constraint parameter is determined based on model parameters of N tasks, wherein the N tasks comprise the task b, and N is an integer greater than 1;
   determining, by the access network device, a mean value of dual variable change parameters of the task b based on the cumulative dual variable change parameters that are of the task b and that are sent by the plurality of terminal devices;
   determining, by the access network device, an updated model parameter of the task b based on the mean value of the dual variable change parameters of the task b;
   sending, by the access network device, the updated model parameter of the task b to the server;
   receiving, by the access network device, an updated multi-task constraint parameter sent by the server; and
   sending, by the access network device to the plurality of terminal devices, the updated model parameter and the updated multi-task constraint parameter that are of the task b.

2. The method according to claim 1, wherein the determining, by the access network device, an updated model parameter of the task b based on the mean value of the dual variable change parameters of the task b comprises:

sending, by the access network device, the mean value of the dual variable change parameters of the task b to the server;

receiving, by the access network device, a mean value that is of dual variable change parameters corresponding to another task and that is sent by the server, wherein the another task is a task other than the task b in the N tasks;

determining, by the access network device, a change amount of a model parameter of the task b based on a mean value of dual variable change parameters corresponding to the N tasks; and

determining, by the access network device, the updated model parameter of the task b based on the change amount of the model parameter of the task b.

3. The method according to claim 2, wherein the multi-task constraint parameter comprises W and $\Omega$, W is a matrix obtained by combining the model parameters of the N tasks, and $\Omega = (W^T W)^{\frac{1}{2}} / \left( tr(W^T W)^{\frac{1}{2}} \right)$ .

4. The method according to claim 3, wherein $\Delta w_b = \frac{1}{\lambda_1} \sum_{b'=1}^{N} \Omega[b, b'] \overline{X_{b'}}$ , $\Delta w_b$ is the change amount of the model parameter of the task b, $\lambda_1$ is greater than 0, and $\overline{X_{b'}}$ is a mean value of dual variable change parameters of a task b'.

5. The method according to claim 3 or 4, wherein $\mathcal{R}_b(w_b) = \frac{1}{N} \lambda_1 tr(W \Omega^{-1} W^T)$ , $\mathcal{R}_b(w_b)$ is the multi-task constraint of the task b, $w_b$ is the current model parameter of the task b, the conjugate dual function of the multi-task constraint of the task b is $\mathcal{R}_b^*(w_b)$ , and $\lambda_1$ is greater than 0.

6. The method according to claim 1, wherein the determining, by the access network device, an updated model parameter of the task b based on the mean value of the dual variable change parameters of the task b comprises:

determining, by the access network device, the updated model parameter of the task b based on the mean value of the dual variable change parameters of the task b and the multi-task constraint parameter of the task b.

7. The method according to claim 6, wherein the multi-task constraint parameter comprises $\overline{w}$, $\overline{W} = \frac{1}{N} \sum_{b'=1}^{N} W_{b'}$ , and $w_{b'}$ is a current model parameter of the task b'.

8. The method according to claim 7, wherein $w_{b,update} = \frac{1}{\lambda_2 + \lambda_3} \left( \lambda_3 \overline{W} + \overline{X_b} \right)$ , $w_{b,update}$ is the updated model parameter of the task b, $\overline{X_b}$ is the mean value of the dual variable change parameters of the task b, and $\lambda_2$ and $\lambda_3$ are greater than 0.

9. The method according to claim 7 or 8, wherein $\mathcal{R}_b(w_b) = \frac{\lambda_3}{2} |w_b - \overline{w}|^2$ , $\mathcal{R}_b(w_b)$ is the multi-task constraint of the task b, $w_b$ is a current model parameter of the task b, the conjugate dual function of the multi-task constraint of the task b is $\mathcal{R}_b^*(w_b)$ , and $\lambda_3$ is greater than 0.

10. The method according to any one of claims 1 to 9, wherein

$$D_b(\alpha_b) = \frac{1}{n_b} \sum_{j=1}^{n_b} -\mathcal{L}^*\left(-\alpha_b^j\right) + \mathcal{R}_b^*(w_b),$$

wherein

$D_b(\alpha_b)$ is the value of the dual sub-problem of the task b, $n_b$ is a total amount of training data of the task b, $\alpha_b^j$ is a dual variable of data $\left(x_b^j, y_b^j\right)$, $x_b^j$ is a jth piece of data in the $n_b$ pieces of training data, $y_b^j$ is a label corresponding to the jth piece of data in the $n_b$ pieces of training data, $j \in \{1, ..., n_b\}$, $\alpha_b := \left[\alpha_b^1, ..., \alpha_b^{n_b}\right]$, $\mathcal{R}_b^*(w_b)$ is the

conjugate dual function of $\mathcal{R}_b(w_b)$, $\mathcal{R}_b(w_b)$ is the multi-task constraint of the task b, and $w_b$ is the current model parameter of the task b.

11. A federated learning method, wherein the method comprises:

adjusting, by a terminal device, dual variables corresponding to $S_{b,p}$ pieces of data in a local training data set, to increase a value of a dual sub-problem corresponding to a task b, wherein the value of the dual sub-problem corresponding to the task b is obtained based on dual variables corresponding to all local training data sets of the task b and a conjugate dual function of a multi-task constraint of the task b, the multi-task constraint of the task b is obtained based on a multi-task constraint parameter, and the multi-task constraint parameter is determined based on model parameters of N tasks, wherein the N tasks comprise the task b, and N is an integer greater than 1;

sending, by the terminal device, a cumulative dual variable change parameter of the task b to an access network device, wherein the cumulative dual variable change parameter of the task b is $\sum_{i=1}^{S_{b,p}} \Delta\alpha_b^i x_b^i$, $\Delta\alpha_b^i$ is a change amount for adjusting a dual variable corresponding to an $i^{th}$ piece of data in the $S_{b,p}$ pieces of data, and $x_b^i$ is the $i^{th}$ piece of data in the $S_{b,p}$ pieces of data; and

receiving, by the terminal device, an updated model parameter and an updated multi-task constraint parameter that are of the task b and that are sent by the access network device.

12. The method according to claim 11, wherein the multi-task constraint parameter comprises W and $\Omega$, W is a matrix obtained by combining the model parameters of the N tasks, and $\Omega = (W^T W)^{\frac{1}{2}} / \left( tr(W^T W)^{\frac{1}{2}} \right)$.

13. The method according to claim 12, wherein $\mathcal{R}_b(w_b) = \frac{1}{N}\lambda_1 tr(W\Omega^{-1}W^T)$, $\mathcal{R}_b(w_b)$ is the multi-task constraint of the task b, $w_b$ is a current model parameter of the task b, the conjugate dual function of the multi-task constraint of the task b is $\mathcal{R}_b^*(w_b)$, and $\lambda_1$ is greater than 0.

14. The method according to claim 11, wherein the multi-task constraint parameter comprises $\overline{w}$, $\overline{w} = \frac{1}{N}\sum_{b'=1}^{N} w_{b'}$, and $w_{b'}$ is a current model parameter of the task b'.

15. The method according to claim 11, wherein $\mathcal{R}_b(w_b) = \frac{\lambda_3}{2}|w_b - \overline{w}|^2$, $\mathcal{R}_b(w_b)$ is the multi-task constraint of the task b, $w_b$ is a current model parameter of the task b, the conjugate dual function of the multi-task constraint of the task b is $\mathcal{R}_b^*(w_b)$, and $\lambda_3$ is greater than 0.

16. The method according to any one of claims 11 to 15, wherein

$$D_b(\alpha_b) = \frac{1}{n_b}\sum_{j=1}^{n_b} -\mathcal{L}^*\left(-\alpha_b^j\right) + \mathcal{R}_b^*(w_b),$$

wherein

$D_b(\alpha_b)$ is the value of the dual sub-problem, $n_b$ is a total amount of training data of the task $b$, $\alpha_b^j$ is a dual variable of data $\left(x_b^j, y_b^j\right)$, $x_b^j$ is a $j^{th}$ piece of data in the $n_b$ pieces of training data, $y_b^j$ is a label corresponding to the $j^{th}$ piece of data in the $n_b$ pieces of training data, $j \in \{1, ..., n_b\}$, $\alpha_b := \left[\alpha_b^1, ..., \alpha_b^{n_b}\right]$, $\mathcal{R}_b^*(w_b)$ is the conjugate dual function of $\mathcal{R}_b(w_b)$, $\mathcal{R}_b(w_b)$ is the multi-task constraint of the task b, and $w_b$ is the current model parameter of the task b.

17. A federated learning method, wherein the method comprises:

receiving, by a server, updated model parameters that are of N tasks and that are sent by N access network devices, wherein the N access network devices are in one-to-one correspondence with the N tasks, and N is an integer greater than 1;

updating, by the server, multi-task constraint parameters of the N tasks based on the updated model parameters of the N tasks, to obtain updated multi-task constraint parameters; and

sending, by the server, the updated multi-task constraint parameters to the N access network devices, wherein the updated multi-task constraint parameters are used for training model parameters of the N tasks.

18. The method according to claim 17, wherein before the receiving, by a server, updated model parameters that are of N tasks and that are sent by N access network devices, the method further comprises:

receiving, by the server, mean values that are of dual variable change parameters corresponding to the N tasks and that are sent by the N access network devices; and

sending, by the server to an access network device corresponding to a task b, a mean value of dual variable change parameters corresponding to another task, wherein the task b is any one of the N tasks, and the another task is a task other than the task b in the N tasks.

19. The method according to claim 17 or 18, wherein the updated multi-task constraint parameter comprises $W_{update}$ and $\Omega_{update}$, $W_{update}$ is a matrix obtained by combining the updated model parameters of the N tasks, and

$$\Omega_{update} = \left(W_{update}{}^T W_{update}\right)^{\frac{1}{2}} / \left(tr\left(W_{update}{}^T W_{update}\right)^{\frac{1}{2}}\right) .$$

20. The method according to claim 17, wherein the updated multi-task constraint parameter comprises $\overline{w}_{update}$,

$$\overline{w}_{update} = \frac{1}{N}\sum_{b'=1}^{N} w_{b',update} ,$$ and $w_{b',update}$ is an updated model parameter of the task $b'$.

21. A communication apparatus, comprising a unit configured to perform the method according to any one of claims 1 to 10, or comprising a unit configured to perform the method according to any one of claims 11 to 16, or comprising a unit configured to perform the method according to any one of claims 17 to 20.

22. A communication apparatus, comprising a processor and a memory, wherein the processor is coupled to the memory, and the processor is configured to implement the method according to any one of claims 1 to 10, or the processor is configured to implement the method according to any one of claims 11 to 16, or the processor is configured to implement the method according to any one of claims 17 to 20.

23. A chip, comprising a processor and an interface, wherein the processor is coupled to the interface; and the interface is configured to receive or output a signal, and the processor is configured to execute code instructions, to cause the method according to any one of claims 1 to 10 to be performed, or to cause the method according to any one of claims 11 to 16 to be performed, or to cause the method according to any one of claims 17 to 20 to be performed.

24. A computer-readable storage medium, wherein the computer-readable storage medium stores computer-executable instructions; and when the computer-executable instructions are invoked by the computer, the computer is caused to perform the method according to any one of claims 1 to 10, or the computer is caused to perform the method according to any one of claims 11 to 16, or the computer is caused to perform the method according to any one of claims 17 to 20.

25. A computer program product, wherein the computer program product comprises computer program code; and when the computer program code is run by a computer, the computer is caused to perform the method according to any one of claims 1 to 10, or the computer is caused to perform the method according to any one of claims 11 to 16, or the computer is caused to perform the method according to any one of claims 17 to 20.

FIG. 1

| Terminal device | Access network device | Server |
|---|---|---|

201: The terminal device adjusts dual variables corresponding to $S_{b,p}$ pieces of data in a local training data set, to increase a value of a dual sub-problem corresponding to a task b

202: The terminal device sends a cumulative dual variable change parameter of the task b to the access network device

203: The access network device determines a mean value of dual variable change parameters of the task b based on cumulative dual variable change parameters that are of the task b and that are sent by a plurality of terminal devices

204: The access network device determines an updated model parameter of the task b based on the mean value of the dual variable change parameters of the task b

205: The access network device sends the updated model parameter of the task b to the server

206: The server updates a multi-task constraint parameter based on updated model parameters of N tasks, to obtain an updated multi-task constraint parameter

208: The access network device sends, to the plurality of terminal devices, the updated model parameter and the updated multi-task constraint parameter that are of the task b

207: The server sends the updated multi-task constraint parameter to N access network devices

FIG. 2

Communication
apparatus

Communication
unit — 301

Processing unit — 302

FIG. 3

Communication apparatus 400

Processor — 401

Instructions — 403

Memory — 402

Instructions — 404

Transceiver — 405

Antenna — 406

FIG. 4

500

Chip

Memory — 503

Processor — 501

Interface — 502

FIG. 5

## INTERNATIONAL SEARCH REPORT

| International application No. |
| --- |
| **PCT/CN2022/132258** |

**A. CLASSIFICATION OF SUBJECT MATTER**

H04L 27/00(2006.01)i

According to International Patent Classification (IPC) or to both national classification and IPC

**B. FIELDS SEARCHED**

Minimum documentation searched (classification system followed by classification symbols)

IPC: H04L，G06F

Documentation searched other than minimum documentation to the extent that such documents are included in the fields searched

Electronic data base consulted during the international search (name of data base and, where practicable, search terms used)

CNTXT, DWPI, ENTXT, VEN: 联邦学习, 联合学习, 多任务, 对偶, 对偶变量, 问题, 约束, 子任务, federated, learning, multi-task, dual, variable, constrained

**C. DOCUMENTS CONSIDERED TO BE RELEVANT**

| Category* | Citation of document, with indication, where appropriate, of the relevant passages | Relevant to claim No. |
| --- | --- | --- |
| X | CN 114020469 A (CHINA TELECOM CORP., LTD.) 08 February 2022 (2022-02-08) description, paragraphs 38-85 | 17, 19, 21-25 |
| A | CN 112766493 A (BEIJING SENSETIME SCIENCE TECHNOLOGY DEVELOPMENT CO., LTD.) 07 May 2021 (2021-05-07) entire document | 1-25 |
| A | CN 113900796 A (SHANDONG ELECTRIC POWER ENGINEERING CONSULTING INSTITUTE CORP., LTD.) 07 January 2022 (2022-01-07) entire document | 1-25 |
| A | CN 115293358 A (CHINA ELECTRONICS STANDARDIZATION INSTITUTE et al.) 04 November 2022 (2022-11-04) entire document | 1-25 |
| A | CN 113194489 A (XIDIAN UNIVERSITY) 30 July 2021 (2021-07-30) entire document | 1-25 |
| A | US 2021089878 A1 (INTERNATIONAL BUSINESS MACHINES CORP.) 25 March 2021 (2021-03-25) entire document | 1-25 |

✓ Further documents are listed in the continuation of Box C.    ✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 July 2023** | **19 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/132258** |

### C.    DOCUMENTS CONSIDERED TO BE RELEVANT

| Category* | Citation of document, with indication, where appropriate, of the relevant passages | Relevant to claim No. |
| --- | --- | --- |
| A | SMITH Virginia et al. "federated multi-task learning" <br> *31st conference on neural information processing systems (NIPS 2017),* <br> 31 December 2017 (2017-12-31), <br>     entire document | 1-25 |

Form PCT/ISA/210 (second sheet) (July 2022)

**INTERNATIONAL SEARCH REPORT**
Information on patent family members

| International application No. |
| PCT/CN2022/132258 |

| Patent document cited in search report | | | Publication date (day/month/year) | Patent family member(s) | Publication date (day/month/year) |
|---|---|---|---|---|---|
| CN | 114020469 | A | 08 February 2022 | None | |
| CN | 112766493 | A | 07 May 2021 | None | |
| CN | 113900796 | A | 07 January 2022 | None | |
| CN | 115293358 | A | 04 November 2022 | None | |
| CN | 113194489 | A | 30 July 2021 | None | |
| US | 2021089878 | A1 | 25 March 2021 | None | |

Form PCT/ISA/210 (patent family annex) (July 2022)